# EUROPÄISCHE PATENTSCHRIFT

(11) **EP 1 055 801 B1**
(45) Veröffentlichungstag und Bekanntmachung des Hinweises auf die Patenterteilung: **04.01.2006**
(21) Anmeldenummer: 00110303.5
(22) Anmeldetag: 13.05.2000
(51) Int. Cl.: F01K 7/38

(54) **Verfahren zum Betrieb eines Dampfkraftwerkes**
Method for operating a steam power plant
Procédé pour faire fonctionner une centrale à vapeur

(30) Priorität: 28.05.1999 DE 19924593
(43) Veröffentlichungstag der Anmeldung: 29.11.2000
(73) Patentinhaber: Alstom, 75116 Paris (FR)
(72) Erfinder: Ngo-Beelmann, Ung-Lap, Dr. Ing., 76199 Karlsruhe (DE); Behnke, Klaus, Dipl.-Ing., 69198 Schriesheim (DE); Witt, Michael, Dipl.-Ing., 68219 Mannheim (DE)
(74) Vertreter: Dreiss, Fuhlendorf, Steimle & Becker

(56) Entgegenhaltungen:
- BE-A- 546 043
- DE-B- 1 239 890
- US-A- 4 644 751
- US-A- 5 335 628
- CATALANO: "Can fuel cells survive the free market in the 1990s?" POWER, Bd. 128, Nr. 2, 1984, Seiten 61-63, XP002215949 CONCORD, NEW HAMPSHIRE, US

## Beschreibung

Die Erfindung betrifft ein Verfahren zum Betrieb eines Dampfkraftwerkes nach dem Oberbegriff des Anspruchs 1, beispielsweise bekannt aus DE-B-1 239 890.

Bei einem derartigen allgemein bekannten Dampfkraftwerk wird mittels Teildampf-Massenströmen aus der Turbinendampfmenge das als Speisewasser eingesetzte Kondensat sukzessive bis nahe der Siedetemperatur vorgewärmt, wodurch der thermodynamische Wirkungsgrad des gesamten Prozesses steigt. Durch die Dampfentnahme können die nachfolgenden Dampfturbinenstufen allerdings dem Dampffluid weniger Leistung entnehmen.

Es stellt sich die Aufgabe ein Verfahren der eingangs genannten Art anzugeben, das trotz thermodynamischer Wirkungsgradsteigerung des Gesamtprozesses ein Absinken der Leistungsentnahme bei den nachfolgenden Dampfturbinenstufen verhindert.

Gelöst wird diese Aufgabe erfindungsgemäß durch die im Anspruch 1 angegebenen Maßnahmen.

Danach wird das Speisewasser direkt zur Kühlung des Brennstoffzellenprozesses genutzt, wobei die Temperatur des Kondensats ansteigt. Durch die Vorwärmung des Speisewassers aus der Abwärme der Brennstoffzellen und der damit verbundenen Erhöhung der an der Expansion teilnehmenden Dampfmenge wird eine Steigerung des Dampfprozesswirkungsgrades erreicht.

Nach den im Anspruch 2 angegebenen Lösungsmerkmalen wird die Vorwärmung durch eine Kombination aus externer Wärmezufuhr über die Brennstoffzellen und durch eine Teildampfmenge aus dem Dampfturbinenprozess erzielt. Die Vorwärmung läßt sich damit flexibel an die Kriterien des Gesamtprozesses anpassen.

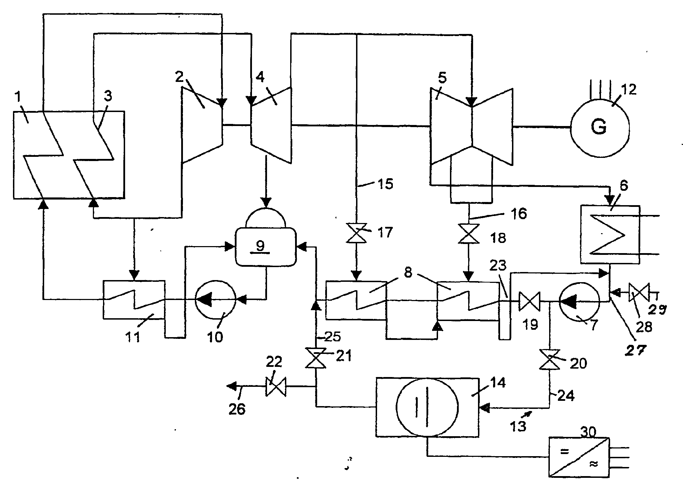

Aus dem Aufsatz "Technische und wirtschaftliche Aspekte ...", VGB-Kraftwerkstechnik 71 (1991) Heft 4, Seiten 332 bis 335, ist zwar der Einsatz von Brennstoffzellen in der Kraft-Wärme-Kopplung beschrieben. Eine Nutzung der Abwärme einer Brennstoffzelle zur Vorwärmung von Speisewasser eines Dampfkraftwerks ist daraus jedoch nicht herleitbar. Das trifft auch für die DE 196 08 738 C1 zu, nach deren Fig. 2 die Abwärme einer Brennstoffzelle in einem Wärmetauscher genutzt wird.

Ein Dampfkraftwerk zur Durchführung des Verfahrens zeichnet sich durch eine in der Vorwärmeeinrichtung eingebundenen Brennstoffzellenanordnung aus. Die weitgehende Verwendung der konventionellen Kraftwerkskomponenten ermöglicht eine einfache Implementierung des erfindungsgemäßen Konzepts auch in bestehende Anlagen.

Mit einer im Anspruch 4 angegebenen bevorzugten Anordnung lassen sich in Abhängigkeit der thermodynamischen Gegebenheiten variable Durchströmungsverhältnisse einstellen. Möglich ist es, das Kondensat gleichzeitig vom angezapften Dampf einer Turbinenstufe und durch die Brennstoffzellenabwärme zu erwärmen. Ebenso ist eine Erwärmung des Kondensats allein mit der Brennstoffzellenanordnung oder allein mit der abgezweigten Turbinendampfmenge durchführbar
. In Abhängigkeit der Abwärmekapazität der Brennstoffzellen kann die Rückführung des vorgewärmten Kondensats an unterschiedlichen Positionen zwischen der Vorwärmeinrichtung und dem Verdampfer in das System erfolgen.

Zur Erhöhung der Flexibilität ist wahlweise ein reiner Dampfprozess, ein kombinierter Brennstoffzellen-Dampfprozess oder ein reiner Brennstoffzellenbetrieb möglich.

Anhand eines Ausführungsbeispieles und einer schematischen Zeichnung wird das erfindungsgemäße Verfahren und ein Dampfkraftwerk zur Durchführung des Verfahrens beschrieben.

Die Zeichnung zeigt den Ablauf eines kombinierten Brennstoffzellen-Dampfprozesses. Der konventionelle Dampfkreislauf erfolgt über einen Verdampfer 1, eine Hochdruckturbine 2, eine Zwischenüberhitzung 3, eine Mitteldruckturbine 4, eine Niederdruckturbine 5, einen Kondensator 6, eine Kondensatpumpe 7, eine Vorwärmeeinrichtung 8, einen Mischvorwärmer 9, eine Speisewasserpumpe 10 und über eine Speisewasservorwärmung 11 wieder zum Verdampfer 1. Die Wellenleistung des Turbinenstrangs wird im Generator 12 in elektrische Leistung umgewandelt und an das elektrische Netz übergeben.

Erfindungsgemäß sind in einem die Vorwärmeeinrichtung 8 umführenden Bypass 13 Brennstoffzellen 14 vorgebbarer Leistung angeordnet. In vom Dampfsystem abzweigenden und zur Vorwärmeeinrichtung 8 hinführenden Leitungen 15, 16 befinden sich Drossel - oder Regelventile 17, 18. Ebensolche Drosselventile 19, 20, 21 und 22 sind in der Kondensatzufuhrleitung 23, der Vor-und Rücklaufleitung 24, 25 der Brennstoffzellen 14 und in einer Verbindungsleitung 26 zu einer nicht weiter dargestellten Wärmesenke angeordnet.

Sind die Drosselventile 17, 18, 19 sowie 22 geschlossen und die Drosselventile 20, 21 geöffnet, so wird das über eine Leitung 27 herangeführte Kondensat oder das über eine durch ein Ventil 28 absperrbare Leitung 29 zur Verfügung gestellte Speisewasser von der Kondensatpumpe 7 zu den Brennstoffzellen 14 geleitet. Das Kondensat nimmt die Abwärme des Brennstoffzellenprozesses auf. Nunmehr erwärmtes Kondensat (Speisewasser) gelangt über die Rücklaufleitung 25 zum Mischvorwärmer 9, von wo es nach einer weiteren Speisewasservorwärmung 11 zum Verdampfer 1 gelangt. In der vorgenannten Drosselventilstellung erfolgt die Vorwärmung allein durch die Abwärme des Brennstoffzellenbetriebes, so daß die seither zur Erzeugung der Vorwärmung erforderliche Dampfmenge eingespart wird und die Generatorleistung erhöht. Auch nach der Speisewasserpumpe 10 kann eine Einkoppelung der Abwärme des Brennstoffzellenprozesses erfolgen. In diesem Fall kann die Speisewasservorwärmung 11 ganz oder teilweise gedrosselt werden Die im Brennstoffzellenprozess erzeugte elektrische Leistung wird über einen Inverter 30 an das elektrische Netz abgeben. Je nach der Höhe der Arbeitstemperatur der verwendeten Brennstoffzellen 14 kann die Rückführung des vorgewärmten Speisewassers bereits im Bereich der Rücklaufleitung 25 oder erst nach dem Mischvorwärmer 9 beziehungsweise nach dem Speisewasservorwärmer 11 erfolgen.

Sobald die Drosselventile 17, 18, 19, 20 und 21 auch nur teilweise geöffnet sind, entsteht ein kombinierter Brennstoffzellen-/Dampfprozess. Auf diese Weise kann auf den Leistungsbedarf eingewirkt werden. Eine geringere Generatorleistung läßt dann zum Beispiel eine Vorwärmung mittels Dampf zu, die eine Nutzung der Brennstoffzellenabwärme über die durch Öffnen des Drosselventils 22 zugängliche Wärmesenke, wie zum Beispiel eine Fernheizung, erlaubt.

## Patentansprüche

1. Verfahren zum Betrieb eines Dampfkraftwerkes, wobei in einem Verdampfer (1) erzeugter Dampf nach dem Durchströmen wenigstens einer Turbine (2, 3, 4) in einem Kondensator (6) niedergeschlagen wird, das gewonnene Kondensat vorgewärmt und dem Verdampfer als Speisewasser wieder zugeführt wird, **dadurch gekennzeichnet, daß** zur Vorwärmung des Kondensats die Abwärme aus Brennstoffzellen (14) verwendet wird.

2. Verfahren nach Anspruch 1, **dadurch gekennzeichnet, daß** zur Vorwärmung des Kondensats zusätzlich zur Abwärme der Brennstoffzellen (14) der Wärmeinhalt einer vom Dampfturbinenprozess abgezweigten Teildampfmenge verwendet wird.

3. Dampfkraftwerk mit einem Verdampfer (1), wenigstens einer Turbine (2, 3, 4), einem Kondensator (6), einer Leitungsverbindung (23) zur Rückführung des Kondensats zum Verdampfer und einer Einrichtung (8) zum Vorwärmen des Kondensats, zur Durchführung eines der Verfahren gemäß Anspruch 1 oder 2, **dadurch gekennzeichnet, daß** wenigstens eine Brennstoffzelle (14) in der Einrichtung (8) integriert ist.

4. Dampfkraftwerk nach Anspruch 3, **dadurch gekennzeichnet, daß** die Brennstoffzellen (14) in einer die Einrichtung (8) umführenden Bypassleitung (13) angeordnet sind, daß in einem zur Brennstoffzellenanordnung hinführenden Vorlauf (24) und in einem von der Brennstoffzellenanordnung wegführenden Rücklauf (25) jeweils ein Drosselventil (20, 21) angeordnet ist und daß der Vorlauf zwischen einer Kondensatpumpe (7) und einem Drosselventil (19) von einer zur Einrichtung (8) hinführenden Leitung (23) abzweigt und daß zwischen wenigstens einer Turbine (2, 3, 4) und der Einrichtung (8) eine Verbindungsleitung (15, 16) verläuft, die mit einem Drosselventil (17, 18) versehen ist.

5. Dampfkraftwerk nach Anspruch 3 oder 4, **dadurch gekennzeichnet, daß** das vorgewärmte Kondensat an unterschiedlichen Positionen zwischen der Einrichtung (8) und dem Verdampfer (1) in das System eingeleitet wird.

6. Dampfkraftwerk nach einem der Ansprüche 3 bis 5, **dadurch gekennzeichnet, daß** das durch die Abwärme der Brennstoffzellen (14) erwärmte Kondensat einer Wärmesenke zuführbar ist.

7. Dampfkraftwerk nach einem der Ansprüche 3 bis 6, **dadurch gekennzeichnet, daß** der Brennstoffzellenanordnung ein Inverter (30) nachgeschaltet ist.

## Claims

1. A method for operating a steam power plant, steam that has been generated in an evaporator (1) condensing in a condenser (6) after flowing through at least one turbine (2, 3, 4), the generated condensate being preheated and fed to the evaporator as feed water, wherein the waste heat from fuel cells (14) is used for preheating the condensate.

2. The method as recited in Claim 1, wherein, in addition to the waste heat of the fuel cells (14), the heat content of a partial quantity of steam derived from the steam turbine process is also used for preheating the condensate.

3. A steam power plant having an evaporator (1), at least one turbine (2, 3, 4), a condenser (6), a line connection (23) for recirculating the condensate to the condenser, and a device (8) for preheating the condensate, in order to carry out one of the methods according to Claim 1 or 2, wherein at least one fuel cell (14) is integrated in the device (8).

4. The steam power plant as recited in Claim 3, wherein the fuel cells (14) are arranged in a bypass line (13) that circumvents the device (8), a choke valve (20, 21) in each case being arranged in a flow pipe (24) that leads to the fuel cell arrangement and in a return pipe (25) that leads away from the fuel cell arrangement, the feed pipe, between a condensate pump (7) and a choke valve (19), branching off from a line (23) that leads to the device (8), and a connecting line (15, 16) that is provided with a choke valve (17, 18) running between at least one turbine (2, 3, 4) and the device (8).

5. The steam power plant as recited in Claim 3 or 4, wherein the preheated condensate is introduced into the system at varying locations between the device (8) and the evaporator (1).

6. The steam power plant as recited in any of Claims 3 to 5, wherein the condensate that is heated by the waste heat of the fuel cells (14) can be fed to a heat sink.

7. The steam power plant as recited in any of Claims 3 to 6, wherein an inverter (30) is connected downstream of the fuel cell arrangement.

## Revendications

1. Procédé pour faire fonctionner une centrale à vapeur, moyennant quoi la vapeur produite dans un évaporateur (1) se dépose dans un condensateur (6) après être passée par au moins une turbine (2, 3, 4), le condensat extrait est préchauffé puis ramené vers l'évaporateur sous forme d'eau d'alimentation, **caractérisé en ce que**, pour préchauffer le condensat, on utilise la chaleur dissipée par les cellules électrochimiques (14).

2. Procédé selon la revendication 1, **caractérisé en ce que**, pour préchauffer le condensat, on utilise, outre la chaleur dissipée par les cellules électrochimiques (14), la capacité calorifique d'une quantité de vapeur partielle émise par le processus des turbines à vapeur.

3. Centrale à vapeur comportant un évaporateur (1), au moins une turbine (2, 3, 4), un condensateur (6), une conduite de raccordement (23) permettant de ramener le condensat jusqu'à l'évaporateur, et un dispositif (8) permettant de préchauffer le condensat, afin de mettre en oeuvre un procédé selon l'une quelconque des revendications 1 ou 2, **caractérisée en ce qu'**au moins une cellule électrochimique (14) est intégrée dans le dispositif (8).

4. Centrale à vapeur selon la revendication 3, **caractérisée en ce que** les cellules électrochimiques (14) sont disposées dans une conduite de dérivation (13) contournant le dispositif (8), **en ce que**, dans une canalisation montante (24) menant au dispositif à cellules électrochimiques, et dans une canalisation de retour (25) revenant du dispositif à cellules électrochimiques, est respectivement disposée une soupape de ralenti (20, 21), et **en ce que** la canalisation montante se divise entre une pompe à condensat (7) et une soupape de ralenti (19) d'une conduite (23) menant au dispositif (8), et **en ce que**, entre au moins une turbine (2, 3, 4) et le dispositif (8) est disposée une conduite de raccordement (15, 16), laquelle est dotée d'une soupape de ralenti (17, 18).

5. Centrale à vapeur selon l'une quelconque des revendications 3 ou 4, **caractérisée en ce que** le condensat préchauffé est introduit dans le système à différents emplacements entre le dispositif (8) et l'évaporateur (1).

6. Centrale à vapeur selon l'une quelconque des revendications 3 à 5, **caractérisée en ce que** le condensat réchauffé grâce à la chaleur dissipée par les cellules électrochimiques (14) peut être acheminé vers un puits thermique.

7. Centrale à vapeur selon l'une quelconque des revendications 3 à 6, **caractérisée en ce que**, en aval du dispositif à cellules électrochimiques, est agencé un inverseur (30).
